# EUROPEAN PATENT SPECIFICATION

(11) **EP 3 179 540 B1**
(45) Date of publication and mention of the grant of the patent: **20.11.2019**
(21) Application number: 15889431.1
(22) Date of filing: 23.10.2015
(51) Int. Cl.: H01M 4/36, H01M 4/62, H01M 4/139, H01M 10/0525, H01M 2/16, H01M 4/13, H01M 10/052, H01M 10/42

(54) **LITHIUM ION BATTERY COMPOSITE POLE PIECE AND PREPARATION METHOD THEREFOR, AND LITHIUM ION BATTERY**
LITHIUM-IONEN-BATTERIE-VERBUNDPOLTEIL UND HERSTELLUNGSVERFAHREN DAFÜR UND LITHIUM-IONEN-BATTERIE
PIÈCE POLAIRE COMPOSITE DE BATTERIE AU LITHIUM-ION ET SON PROCÉDÉ DE PRÉPARATION AINSI QUE BATTERIE AU LITHIUM-ION

(30) Priority: 14.10.2015 CN 201510662396
(43) Date of publication of application: 14.06.2017
(73) Proprietor: China Aviation Lithium Battery Co., Ltd., High-Tech Zone Luoyang City, Henan 471003 (CN)
(72) Inventor: XIAO, Yazhou, Luoyang Henan 471003 (CN); HUAI, Yongjian, Zhengzhou Henan 471003 (CN); ZHAO, Jinbao, Xiamen Fujian 361001 (CN); BAI, Li, Xin'an County Henan 471003 (CN)
(74) Representative: Hirsch & Associés
(86) International application number: PCT/CN2015/092669
(87) International publication number: WO 2017/063219

(56) References cited:
- WO-A1-2015/068325
- CN-A- 101 501 895
- US-A1- 2015 079 467
- US-A1- 2015 179 998

## Description

The present application claims the priority to Chinese Patent Application No. 201510662396.0, titled "COMPOSITE ELECTRODE SHEET FOR LITHIUM-ION BATTERY AND PREPARING METHOD THEREOF AND LITHIUM-ION BATTERY", filed on October 14, 2015 with the State Intellectual Property Office of the People's Republic of China.

### FIELD

The present disclosure relates to the technical field of lithium-ion battery, and in particular to a composite electrode sheet for a lithium-ion battery and a preparing method thereof and a lithium-ion battery.

### BACKGROUND

To improve an endurance mileage of an electric vehicle and meet practical acquirement of society, developing and designing a lithium-ion battery with a high energy density has been an inevitable trend in a lithium-ion battery industry. However, the lithium-ion battery with high energy in an abuse state (stabbed, extruded, short-circuited, over-charged) tends to cause a safety accident such as exploding or catching fire, therefore, a safety design of the lithium-ion battery faces a large challenge.

How to improve the safety of the lithium-ion battery is a technical problem urgently to be solved in the lithium-ion battery industry. The main problem responsible for causing a safety risk of the lithium-ion battery is that an irreversible electrochemical side reaction occurs inside a battery and finally thermal runaway occurs in the battery. Therefore, it is an important safeguard for achieving the safety of the battery that a self-protection is implemented inside the battery before the thermal runaway occurs inside the battery.

The main method in the industry is to improve a high-temperature resistant physical property of an electrode sheet, such as coating aluminium oxide on the surface of the electrode sheet. However, only the physical property can not prevent a further increasement in temperature of the battery and can not ensure the safety of the battery efficiently.

US 2015/0179998 discloses a secondary battery including a cathode; an anode ; an electrolytic solution and an interlayer provided between the cathode and the anode and including one or more of a polyphosphate salt, a melamine salt, a melamine derivative represented by Formula (1), a metal hydroxide and a metal hydrate, the interlayer partially entering into the cathode, the anode, or both, 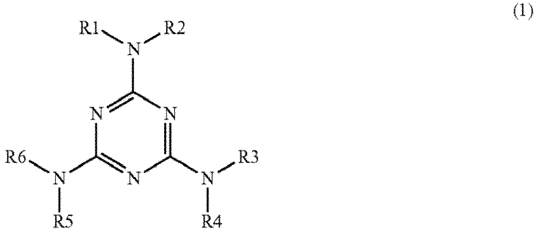 where R1 to R6 are each one of a hydrogen group (-H), a monovalent hydrocarbon group, a monovalent hydroxyl-group-containing hydrocarbon group, a monovalent group obtained by bonding one or more monovalent hydrocarbon groups and one or more oxygen bonds (-O-), a monovalent group obtained by bonding one or more monovalent hydroxyl-group-containing hydrocarbon groups and one or more oxygen bonds, and a monovalent group obtained by bonding two or more thereof.

EP-A-3 067 981 discloses a battery including a positive electrode, a negative electrode, a separator, an electrolytic solution and a particle-containing resin layer. The particles may be either inorganic particles or organic particles. The inorganic particles may be selected from among others ammonium polyphosphate and the organic particles may be selected among others from melamine, melamine cyanurate, melamine polyphosphate. The particle-containing resin layer may be applied to a surface of the positive electrode or a surface of the negative electrode.

### SUMMARY

In view of the above, the technical problem to be solved in the present disclosure is to provide a composite electrode sheet for a lithium-ion battery and a preparing method thereof and a lithium-ion battery. With the composite electrode sheet for the lithium-ion battery according to the disclosure, the increasement in the temperature of the battery can be inhibited, and the safety of the battery can be ensured.

A composite electrode sheet for a lithium-ion battery is provided by the disclosure. The composite electrode sheet includes a battery electrode sheet and a functional coating composited on a surface of the battery electrode sheet. The functional coating is prepared from a functional substance selected from one or more of melamine cyanurate, pentaerythritol melamine phosphate, ammonium polyphosphate, polydimethylsiloxane and melamine pyrophosphate and an adhesive which is one or more of polyvinylidene fluoride and copolymers thereof, acrylic acid and copolymers thereof, acrylate and copolymers thereof, polyvinyl alcohol, carboxymethyl cellulose and polyurethane, and the battery electrode sheet is a positive electrode and/or a negative electrode of a battery; wherein a thickness of the functional coating for one side ranges from 3µm to 6µm, and a mass ratio of the functional substance to the adhesive is (95 to 99):(1 to 5).

Preferably, an active substance of the positive electrode is selected from one or more materials of LiFePO₄, LiMn₂O₄, LiCoO₂, LiV₂O₅, LNiO₂, LiNi_{(1-x-y)}CoₓAl_{y}O₂, LiNi₍₁₋ₘ₋ₙ₎CoₘMnₙO₂ and LiCo_{z}Ni_{(1-z)}O₂, where 0≤x≤1, 0≤y≤1, x+y=1, 0≤m≤1, 0≤n≤1, m+n=1, 0≤z≤1; and an active substance of the negative electrode is selected from one or more of graphite, mesocarbon microbead and a silicon-based material.

A preparing method for preparing the composite electrode sheet for a lithium-ion battery is further provided according to the disclosure. The preparing method includes following steps:
(A) dispersing a functional substance and an adhesive into a solvent to obtain mixed slurry, wherein the functional coating is prepared from a functional substance and an adhesive, the functional substance is selected from one or more of melamine cyanurate, pentaerythritol melamine phosphate, ammonium polyphosphate, polydimethylsiloxane and melamine pyrophosphate, the adhesive is one or more of polyvinylidene fluoride and copolymers thereof, acrylic acid and copolymers thereof, acrylate and copolymers thereof, polyvinyl alcohol, carboxymethyl cellulose and polyurethane ; and
(B) coating the mixed slurry on a surface of a battery electrode sheet and drying the mixed slurry to obtain the composite electrode sheet for the lithium-ion battery, where the battery electrode sheet is a positive electrode and/or a negative electrode of a battery.

Preferably, a method for the coating is selected from transfer coating, dip coating, blade coating, gravure coating, spray coating and screen printing.

A lithium-ion battery is further provided according to the disclosure, which includes a positive electrode of the battery, a negative electrode of the battery, a separator and an electrolyte. The positive electrode and/or the negative electrode of the battery are the above composite electrode sheet for the lithium-ion battery or the composite electrode sheet for the lithium-ion battery prepared by the above preparing method.

Compared with the conventional technology, the disclosure provides a composite electrode sheet for a lithium-ion battery. The composite electrode sheet includes a battery electrode sheet and a functional coating composited on a surface of the battery electrode sheet, where the functional coating is prepared from a functional substance selected from one or more of melamine cyanurate, pentaerythritol melamine phosphate, ammonium polyphosphate, polydimethylsiloxane and melamine pyrophosphate and an adhesive which is one or more of polyvinylidene fluoride and copolymers thereof, acrylic acid and copolymers thereof, acrylate and copolymers thereof, polyvinyl alcohol, carboxymethyl cellulose and polyurethane, , and the battery electrode sheet is a positive electrode and/or negative electrode of a battery; wherein a thickness of the functional coating for one side ranges from 3µm to 6µm, and a mass ratio of the functional substance to the adhesive is (95 to 99):(1 to 5).

According to the composite electrode sheet for the lithium-ion battery provided by the disclosure, the functional coating is coated on the surface of the battery electrode sheet. When the temperature of the lithium-ion battery increases, the functional coating can quickly absorb excess heat of the battery, regard the excess heat as reaction entropy, spontaneously respond to a chemical reaction, and generate a protecting coat on the surface of the battery electrode sheet, which can effectively inhibit further increasement in the temperature of the battery on the one hand and can passivate an active coating of a cathode and an anode of the battery on the other hand, thereby, controlling the safety risk of the battery at root and ensuring the safety of the battery. In addition, since the hardness of the functional coating in the disclosure is low, process loss in a battery manufacturing process can be decreased, thereby, reducing a production cost of the battery.

It can be shown that the composite electrode sheet for the lithium-ion battery provided by the disclosure has a superior safety performance when performing a safety detection on the battery. In addition, a good electrochemical performance is showed by the battery. In a case that the composite electrode sheet is prepared into the lithium-ion battery, a capacity retention ratio of the battery is larger than 85% within 1500 cycles, and the capacity retention ratio of the battery is larger than 95% when the discharge rate is 3C.

### DETAILED DESCRIPTION

A composite electrode sheet for a lithium-ion battery is provided by the disclosure, which includes a battery electrode sheet and a functional coating composited on a surface of the battery electrode sheet. The functional coating is prepared from a functional substance and an adhesive which is one or more of polyvinylidene fluoride and copolymers thereof, acrylic acid and copolymers thereof, acrylate and copolymers thereof, polyvinyl alcohol, carboxymethyl cellulose and polyurethane, the functional substance is selected from one or more of melamine cyanurate, pentaerythritol melamine phosphate, ammonium polyphosphate, polydimethylsiloxane and melamine pyrophosphate, and the battery electrode sheet is a positive electrode and/or a negative electrode of a battery.

The composite electrode sheet for the lithium-ion battery provided by the disclosure includes a battery electrode sheet. The battery electrode sheet may be the positive electrode of the battery, or the negative electrode of the battery, alternatively the battery electrode sheet may be the positive electrode and the negative electrode of the battery.

In the disclosure, an active substance of the positive electrode of the battery is selected from one or more materials of LiFePO₄, LiMn₂O₄, LiCoO₂, LiV₂O₅, LNiO₂, LiNi_{(1-x-y)}CoₓAl_{y}O₂, LiNi₍₁₋ₘ₋ₙ₎CoₘMnₙO₂ and LiCo_{z}Ni_{(1-z)}O₂, where 0≤x≤1, 0≤y≤1, x+y=1, 0≤m≤1, 0≤n≤1, m+n=1, and 0≤z≤1. In some embodiments of the disclosure, the active substance of the positive electrode of the battery is LiNi_{1/3}Co_{1/3}Mn_{1/3}O₂, and in other embodiments of the disclosure, the active substance of the positive electrode of the battery is LiFePO₄.

A preparing method for preparing the positive electrode of the battery is not specially limited in the disclosure, as long as the preparing method for preparing the positive electrode of the battery is well known to those skilled in the art. In the disclosure, the positive electrode of the battery is preferably prepared by the following method:
(A) dispersing an active substance of the positive electrode of the battery, a conductive agent and an adhesive into a solvent to obtain a positive electrode slurry; and
(B) coating the positive electrode slurry on a positive electrode collector, and rolling the positive electrode collector coated with the positive electrode slurry after the positive electrode slurry is dried, to obtain the positive electrode of the battery.

In the disclosure, the active substance of the positive electrode of the battery, the conductive agent and the adhesive are firstly dispersed into the solvent to obtain the positive electrode slurry. Types of the conductive agent and the adhesive are not specially limited in the disclosure, as long as the conductive agent and the adhesive are well known to those skilled in the art. In the disclosure, the conductive agent is preferably acetylene black, Super P, Super S, 350G, Vapor Grown Carbon Fiber (VGCF), Carbon Nanotubes (CNTs), or Ketjen black (KetjenblackEC300J, KetjenblackEC600JD, Carbon ECP, Carbon ECP600JD) and the like. The adhesive is preferably an adhesive commonly used in the positive electrode such as styrene-butadiene rubber, polyacrylic acid, LA type aqueous adhesive, and fluorine-containing olefin polymer. A type of the solvent is not specially limited in the disclosure, as long as the solvent is well known to those skilled in the art. In the disclosure, the solvent is preferably deionized water or NMP.

A method for the dispersing is not specially limited in the disclosure, as long as the method for the dispersing is well known to those skilled in the art.

In the disclosure, after the positive electrode slurry is obtained, the positive electrode slurry is coated on the positive electrode collector. A type of the positive electrode collector is not specially limited in the disclosure, as long as the positive electrode collector is well known to those skilled in the art. In the disclosure, the positive electrode collector is selected from aluminum foil.

The way for coating the positive electrode slurry on the positive electrode collector is not specially limited in the disclosure, and the way for coating may be selected from transfer coating, dip coating, blade coating and extrusion coating.

After the positive electrode slurry is coated on the positive electrode collector, the positive electrode slurry is progressively dried in an oven of a coater. In the disclosure, the temperature of the oven of the coater ranges from 70°C to 130°C. After the coating, a rolling operation is performed to obtain the positive electrode of the battery. A method for the rolling is not specially limited in the disclosure, as long as the method for the rolling is well known to those skilled in the art.

In the disclosure, an active substance of the negative electrode is selected from one or more of graphite, mesocarbon microbead and a silicon-based material. In some embodiments of the disclosure, the active substance of the negative electrode is selected from graphite powder.

A preparing method for preparing the negative electrode of the battery is not specially limited in the disclosure, as long as the preparing method for preparing the negative electrode of the battery is well known to those skilled in the art. In the disclosure, the negative electrode of the battery is preferably prepared by the following method:
(a2) dispersing an active substance of the negative electrode of the battery, a conductive agent, a thickener and an adhesive into a solvent to obtain a negative electrode slurry; and
(b2) coating the negative electrode slurry on a negative electrode collector, and rolling the negative electrode collector coated with the negative electrode slurry after the negative electrode slurry is dried, to obtain the negative electrode of the battery.

In the disclosure, the active substance of the negative electrode of the battery, the conductive agent, the thickener and the adhesive are firstly dispersed into the solvent to obtain the negative electrode slurry. Types of the conductive agent, the thickener and the adhesive are not specially limited in the disclosure, as long as the conductive agent and the adhesive are well known to those skilled in the art. In the disclosure, the conductive agent is preferably acetylene black, Super P, Super S, 350G, Vapor Grown Carbon Fiber (VGCF), Carbon Nanotubes (CNTs), or Ketjen black (KetjenblackEC300J, KetjenblackEC600JD, Carbon ECP, Carbon ECP600JD) and the like. The thickener is preferably sodium carboxymethyl cellulose (CMC). The adhesive is preferably one or more of styrene-butadiene rubber, polyacrylic acid, LA type aqueous adhesive and fluorine-containing olefin polymer. A type of the solvent is not specially limited in the disclosure, as long as the solvent is well known to those skilled in the art. In the disclosure, the solvent is preferably deionized water or NMP.

A method for the dispersing is not specially limited in the disclosure, as long as the method for the dispersing is well known to those skilled in the art.

In the disclosure, after the negative electrode slurry is obtained, the negative electrode slurry is coated on the negative electrode collector. A type of the negative electrode collector is not specially limited in the disclosure, as long as the negative electrode collector is well known to those skilled in the art. In the disclosure, the negative electrode collector is selected from copper foil.

The way for coating the negative electrode slurry on the negative electrode collector is not specially limited in the disclosure, and the way for coating may be selected from transfer coating, dip coating, blade coating, and extrusion coating. After the negative electrode slurry is coated the negative electrode collector, the negative electrode slurry is dried in an oven of a coater. In the disclosure, the temperature for the drying ranges from 70°C to 120°C.

After the coating and drying, a rolling operation is performed to obtain the negative electrode of the battery. A specific method for the rolling is not specially limited in the disclosure, as long as the method for the rolling is well known to those skilled in the art.

The composite electrode sheet for the lithium-ion battery provided by the disclosure further includes the functional coating composited on the surface of the battery electrode sheet, and the functional coating is prepared from the functional substance and the adhesive.

The functional coating provided by the disclosure includes the functional substance, and when the temperature of the battery increases, the functional substance, which used to prepare the functional coating on the surface of the composite electrode sheet for the lithium-ion battery, can absorb heat of the battery, regard the heat as reaction entropy, spontaneously respond to a chemical reaction and generate a protecting coat on the surface of the battery electrode sheet. In the disclosure, the functional substance is selected from one or more of melamine cyanurate, pentaerythritol melamine phosphate, ammonium polyphosphate, polydimethylsiloxane and melamine pyrophosphate.

In some specific embodiments of the disclosure, the functional substance is selected from melamine cyanurate (MCA). In other specific embodiments of the disclosure, the functional substance is selected from pentaerythritol melamine phosphate (PPMS). In other specific embodiments of the disclosure, the functional substance is selected from melamine pyrophosphate (MPP). In other specific embodiments of the disclosure, the functional substance is selected from ammonium polyphosphate (APP). In other specific embodiments of the disclosure, the functional substance is selected from a compound of the ammonium polyphosphate (APP) and the melamine cyanurate (MCA). In other specific embodiments of the disclosure, the functional substance is selected from the ammonium polyphosphate (APP) granule coated by polydimethylsiloxane (PDMS), and the mass ratio of the polydimethylsiloxane to the ammonium polyphosphate is preferably 80:15. The methods for the above coating are not specially limited in the disclosure, and preferably the coating is performed according to the following method:
quickly stirring the polydimethylsiloxane and the ammonium polyphosphate at 10m/s to 80m/s linear velocity for 15 to 60 minutes in a high-speed dispersion machine to obtain polydimethylsiloxane-coated ammonium polyphosphate granule (PDMS-APP).

The functional coating provided by the disclosure further includes the adhesive, the adhesive is selected from one or more of polyvinylidene fluoride and copolymers thereof, acrylic acid and copolymers thereof, acrylate and copolymers thereof, polyvinyl alcohol, carboxymethyl cellulose and polyurethane, and the adhesive is preferably one or more of polyvinylidene difluoride (PVDF), styrene-butadiene rubber (SBR) and LA132 aqueous adhesive. The adhesive used in the disclosure may adhere closely to the battery electrode sheet, which ensures that the functional coating is closely adhered to the battery electrode sheet. Because two sides are adhered closely, it is avoided a phenomenon of fines removal during vibrating, bending or folding, which ensures the uniformity of an electric current in the process of charging or discharging the battery.

In the disclosure, a mass ratio of the functional substance to the adhesive is (95 to 99):(1 to 5).. In specific embodiments of the disclosure, the mass ratio of the functional substance to the adhesive is 95:5.

In the disclosure, the functional coating may be composited on one surface of the battery electrode sheet and may also be composited on both surfaces of the battery electrode sheet.

A thickness of the functional coating in the disclosure ranges from 3µm to 6µm. In some specific embodiments of the disclosure, the thickness of the coating is 3µm. In other specific embodiments of the disclosure, the thickness of the coating is 4µm. In other specific embodiments of the disclosure, the thickness of the coating is 5µm.

A preparing method for preparing the above composite electrode sheet for the lithium-ion battery is further provided according to the disclosure. The preparing method includes the following steps:
(A) dispersing a functional substance and an adhesive into a solvent to obtain mixed slurry, where the functional substance is selected from one or more of melamine cyanurate, pentaerythritol melamine phosphate, ammonium polyphosphate, polydimethylsiloxane and melamine pyrophosphate, the adhesive is one or more of polyvinylidene fluoride and copolymers thereof, acrylic acid and copolymers thereof, acrylate and copolymers thereof, polyvinyl alcohol, carboxymethyl cellulose and polyurethane ; and
(B) coating the mixed slurry on a surface of a battery electrode sheet and drying the mixed slurry to obtain the composite electrode sheet for the lithium-ion battery.

In the disclosure, the functional substance and the adhesive are first dispersed into the solvent to obtain the mixed slurry. A method for the dispersing is not specially limited in the disclosure, as long as the method for the dispersing is well known to those skilled in the art. In the disclosure, preferably dispersing is performed according to the following method:
dispersing the functional substance and the adhesive into the solvent and mixing to obtain the mixed slurry in a high-speed dispersion machine.

A revolving speed of the high-speed dispersion machine preferably ranges from 10m/s to 80m/s, and a dispersing time preferably ranges from 10 minutes to 90 minutes. The solvent includes, but not limited to, one or more of deionized water, ethyl alcohol, benzene, toluene, NMP and acetone. In some specific embodiments of the disclosure, the solvent is preferably deionized water or NMP. After the mixed slurry is obtained, the solvent is used to regulate solid content of the mixed slurry, and finally the solid content of the mixed slurry is controlled to range from 30wt% to 60wt% and preferably range from 35wt% to 50wt%. The solvent used to regulate the solid content of the mixed slurry in the disclosure includes, but not limited to, one or more of deionized water, ethyl alcohol, benzene, toluene, NMP and acetone.

After the mixed slurry is obtained, the mixed slurry is coated on the surface of the battery electrode sheet, and the mixed slurry is dried to obtain the composite electrode sheet for the lithium-ion battery.

A method for coating the mixed slurry on the surface of the battery electrode sheet is not specially limited in the disclosure, as long as the method for coating is well known to those skilled in the art. In the disclosure, transfer coating, dip coating, blade coating, gravure coating, spray coating or screen printing are preferred.

After the mixed slurry is coated on the surface of the battery electrode sheet, the mixed slurry is dried to obtain the composite electrode sheet for the lithium-ion battery. A method for the drying is not specially limited in the disclosure, as long as the method for the drying is well known to those skilled in the art. In the disclosure, the temperature for the drying preferably ranges from 40°C to 90°C.

A lithium-ion battery is further provided according to the disclosure, which includes a positive electrode of the battery, a negative electrode of the battery, a separator and an electrolyte. The positive electrode and/or negative electrode of the battery are the above composite electrode sheet for the lithium-ion battery or the composite electrode sheet for the lithium-ion battery prepared by the above preparing method.

The separator of the lithium-ion battery is not specially limited in the disclosure, as long as the separator is a separator which can be used for the lithium-ion battery and is well known to those skilled in the art. In the disclosure, the separator is preferably polyolefin microporous film, polyolefin ceramic coating film, PVDF separator or fiber film such as polyimide.

A type of the electrolyte of the lithium-ion battery is not specially limited in the disclosure, as long as the electrolyte is well known to those skilled in the art.

According to the composite electrode sheet for the lithium-ion battery provided in the disclosure, the thermal stability of the composite electrode sheet may be improved by means of a high-temperature resistant physical property of the functional coating. The safety of the battery is ensured preliminarily when the temperature of the battery increases.

According to the composite electrode sheet for the lithium-ion battery provided in the disclosure, with the aid of a good chemical property of the functional coating, when the temperature of the battery increases, the functional coating can quickly absorb excess heat of the battery, regard the excess heat as reaction entropy, spontaneously respond to a chemical reaction and generate a protecting coat. On the one hand, further increasement in the temperature of the battery is effectively inhibited, and on the other hand an active coating of a cathode and an anode of the battery is passivated, thereby, controlling the safety risk of the battery at root and ensuring the safety of the battery.

In addition, since the hardness of the functional coating in the disclosure is low, process loss in a battery manufacturing process can be decreased, thereby, reducing a production cost of the battery.

It can be shown that the lithium-ion battery prepared by the composite electrode sheet has a superior safety performance when performing a safety detection on the battery. The capacity retention ratio of the battery is larger than 85% within 1500 cycles, and the capacity retention ratio of the battery is larger than 95% when the discharge rate is 3C.

To further understand the disclosure, hereinafter the composite electrode sheet for the lithium-ion battery and the preparing method thereof and the lithium-ion battery provided by the disclosure are illustrated in conjunction with embodiments, and a protection scope of the disclosure is not limited by the following embodiments.

### COMPARATIVE EXAMPLE 1

### a. preparation of a positive electrode

An active material LiNi_{1/3}Co_{1/3}Mn_{1/3}O₂ with a 93wt% mass fraction, a conductive agent Super P with a 4wt% mass fraction and an adhesive PVDF with a 3wt% mass fraction are added into a solvent NMP and uniformly mixed to prepare a ternary positive electrode slurry, and the positive electrode slurry is uniformly coated on a positive electrode collector Al foil with a 20µm thickness and dried to obtain a positive electrode, which is rolled for reserve.

### b. preparation of a negative electrode

An active material of a negative electrode being graphite powder with a 95wt% mass fraction, a conductive agent KS-6 with a 2wt% mass fraction, a thickener CMC (sodium carboxymethyl cellulose) with a 1wt% mass fraction and an adhesive SBR (styrene-butadiene rubber) with a 2wt% mass fraction are added into a solvent being deionized water and uniformly mixed to obtain a negative electrode slurry, and the negative electrode slurry is uniformly coated on a negative electrode collector Cu foil with a 10µm thickness and dried to obtain the negative electrode, which is rolled for reserve.

### c. preparation of a battery

(1) The above positive electrode sheet, negative electrode sheet of the battery and polyethylene-based ceramic separator with a 24µm thickness (a thickness of a ceramic coating is 4µm) are stacked to form a component; and
(2) injecting electrolyte: injecting the electrolyte into the component of the lithium-ion battery to obtain a lithium-ion secondary battery, the electrolyte is LiPF₆ in a system including EC, EMC and DMC, a concentration of the LiPF₆ is 1mol/ L, and a volume ratio of EC, EMC and DMC is 1:1:1.

### COMPARATIVE EXAMPLE 2

### a. preparation of a positive electrode

An active material LiFePO₄ with a 93wt% mass fraction, a conductive agent being carbon black with a 3.5wt% mass fraction and an adhesive LA132 with a 3.5wt% mass fraction are added into a solvent being deionized water and uniformly mixed to prepare a ternary positive electrode slurry, and the positive electrode slurry is uniformly coated on a positive electrode collector Al foil with a 20µm thickness and dried to obtain a positive electrode, which is rolled for reserve.

### b. preparation of a negative electrode

An active material of a negative electrode being graphite powder with a 95wt% mass fraction, a conductive agent KS-6 with a 2wt% mass fraction, a thickener CMC (sodium carboxymethyl cellulose) with a 1wt% mass fraction and an adhesive SBR (styrene-butadiene rubber) with a 2wt% mass fraction are added into a solvent being deionized water and uniformly mixed to obtain a negative electrode slurry, and the negative electrode slurry is uniformly coated on a negative electrode collector Cu foil with a 10µm thickness and dried to obtain the negative electrode, which is rolled for reserve.

### c. preparation of a battery

(1) The above positive electrode sheet, negative electrode sheet of the battery and polypropylene-based ceramic separator with a 24µm thickness (a thickness of a ceramic coating is 4µm) are stacked to form a component; and
(2) injecting electrolyte: injecting the electrolyte into the component of the lithium-ion battery to obtain a lithium-ion secondary battery. The electrolyte is LiPF₆ in a system including EC, EMC and DMC, a concentration of the LiPF₆ is 1mol/ L, and a volume ratio of EC, EMC and DMC is 1:1:1.

### EXAMPLE 1

### a. preparation of a positive electrode sheet

An active material LiFePO₄ with a 93wt% mass fraction, a conductive agent being carbon black with a 3.5wt% mass fraction and an adhesive LA132 with a 3.5wt% mass fraction are added into a solvent being deionized water and uniformly mixed to prepare a ternary positive electrode slurry, and the positive electrode slurry is uniformly coated on a positive electrode collector Al foil with a 20µm thickness and dried to obtain a positive electrode, which is rolled for reserve.

### b. preparation of a mixed slurry

Melamine cyanurate (MCA) and polyvinylidene difluoride (PVDF) are weighed out precisely according to a mass ratio of 97:3. MCA and PVDF are uniformly dispersed into a solvent being N-methyl pyrrolidone (NMP) in a high-speed dispersion machine to obtain an MCA slurry and a PVDF slurry respectively, the MCA slurry and the PVDF slurry are uniformly stirred, and a mixed slurry is obtained by controlling solid content of the slurry to be 50wt% via the solvent NMP.

### c. preparation of a composite positive electrode sheet

The above mixed slurry is coated on both sides of a positive electrode sheet and dried at 70°C, and a coating thickness of a functional coating for one side is controlled to be 4µm.

### d. preparation of a negative electrode

An active material of a negative electrode being graphite powder with a 95wt% mass fraction, a conductive agent KS-6 with a 2wt% mass fraction, a thickener CMC (sodium carboxymethyl cellulose) with a 1wt% mass fraction and an adhesive SBR (styrene-butadiene rubber) with a 2wt% mass fraction are added into a solvent being deionized water and uniformly mixed to obtain a negative electrode slurry, and the negative electrode slurry is uniformly coated on a negative electrode collector Cu foil with a 10µm thickness and dried to obtain the negative electrode, which is rolled for reserve.

### c. preparation of a battery

(1) The above composite positive electrode sheet, the negative electrode sheet of the battery and polypropylene-based ceramic separator with a 24µm thickness are stacked to form a component; and
(2) injecting electrolyte: injecting the electrolyte into the component of the lithium-ion battery to obtain a lithium-ion secondary battery. The electrolyte is LiPF₆ in a system including EC, EMC and DMC, a concentration of the LiPF₆ is 1mol/ L, and a volume ratio of EC, EMC and DMC is 1:1:1.

### EXAMPLE 2

### a. preparation of a positive electrode sheet

An active material LiFePO₄ with a 93wt% mass fraction, a conductive agent being carbon black with a 3.5wt% mass fraction and an adhesive LA132 with a 3.5wt% mass fraction are added into a solvent being deionized water and uniformly mixed to prepare a ternary positive electrode slurry, and the positive electrode slurry is uniformly coated on a positive electrode collector Al foil with a 20µm thickness and dried to obtain a positive electrode, which is rolled for reserve.

### b. preparation of a negative electrode sheet

An active material of a negative electrode being graphite powder with a 95wt% mass fraction, a conductive agent KS-6 with a 2wt% mass fraction, a thickener CMC (sodium carboxymethyl cellulose) with a 1wt% mass fraction and an adhesive SBR (styrene-butadiene rubber) with a 2wt% mass fraction are added into a solvent being deionized water and uniformly mixed to obtain a negative electrode slurry, and the negative electrode slurry is uniformly coated on a negative electrode collector Cu foil with a 10µm thickness and dried to obtain the negative electrode, which is rolled for reserve.

### c. preparation of a mixed slurry

Melamine cyanurate (MCA) and polyvinylidene difluoride (PVDF) are weighed out precisely according to a mass ratio of 97:3. MCA and PVDF are uniformly dispersed into a solvent being N-methyl pyrrolidone (NMP) in a high-speed dispersion machine to obtain an MCA slurry and a PVDF slurry respectively, the MCA slurry and the PVDF slurry are uniformly stirred, and a mixed slurry is obtained by controlling solid content of the slurry to be 50wt% via the solvent NMP.

### d. preparation of a composite negative electrode sheet

The above mixed slurry in step c is coated on both sides of the negative electrode sheet prepared in step b and dried at 65 °C, and a coating thickness for one side is controlled to be 3µm.

### e. preparation of a battery

(1) The above composite negative electrode sheet, the positive electrode sheet of a battery and polyethylene-based ceramic separator with a 24µm thickness are stacked to form a component; and
(2) injecting electrolyte: injecting the electrolyte into the component of the lithium-ion battery to obtain a lithium-ion secondary battery. The electrolyte is LiPF₆ in a system including EC, EMC and DMC, a concentration of the LiPF₆ is 1mol/ L, and a volume ratio of EC, EMC and DMC is 1:1:1.

### EXAMPLE 3

### a. preparation of a positive electrode

An active material LiNi_{1/3}Co_{1/3}Mn_{1/3}O₂ with a 93wt% mass fraction, a conductive agent Super P with a 4wt% mass fraction and an adhesive PVDF with a 3wt% mass fraction are added into a solvent NMP and uniformly mixed to prepare a ternary positive electrode slurry, and the positive electrode slurry is uniformly coated on a positive electrode collector Al foil with a 20µm thickness and dried to obtain a positive electrode, which is rolled for reserve.

### b. preparation of a mixed slurry

Ammonium polyphosphate (APP) and polyvinylidene difluoride (PVDF) are weighed out precisely according to a mass fraction of 98:2 in active ingredient. APP and PVDF are uniformly dispersed into NMP in a high-speed dispersion machine to obtain an APP slurry and a PVDF slurry respectively, the APP slurry and the PVDF slurry are uniformly dispersed, and a mixed slurry is obtained by controlling solid content to be 30wt% via NMP.

### c. preparation of a composite positive electrode sheet

The above mixed slurry is coated on both sides of the positive electrode sheet and dried at 75°C, and a coating thickness for one side is controlled to be 5µm.

### d. preparation of a negative electrode

An active material of a negative electrode being graphite powder with a 95wt% mass fraction, a conductive agent KS-6 with a 2wt% mass fraction, a thickener CMC (sodium carboxymethyl cellulose) with a 1wt% mass fraction and an adhesive SBR (styrene-butadiene rubber) with a 2wt% mass fraction are added into a solvent being deionized water and uniformly mixed to obtain a negative electrode slurry, and the negative electrode slurry is uniformly coated on a negative electrode collector Cu foil with a 10µm thickness and dried to obtain the negative electrode, which is rolled for reserve.

### e. preparation of a battery

(1) The above composite positive electrode sheet, the negative electrode sheet of a battery and polyethylene-based ceramic separator with a 24µm thickness (a thickness of a ceramic coating is 4µm) are stacked to form a component; and
(2) injecting electrolyte: injecting the electrolyte into the component of the lithium-ion battery to obtain a lithium-ion secondary battery. The electrolyte is LiPF6 in a system including EC, EMC and DMC, a concentration of the LiPF6 is 1mol/ L, and a volume ratio of EC, EMC and DMC is 1:1:1.

### EXAMPLE 4

### a. preparation of a positive electrode

An active material LiNi1/3Co1/3Mn1/3O2 with a 93wt% mass fraction, a conductive agent Super P with a 4wt% mass fraction and an adhesive PVDF with a 3wt% mass fraction are added into a solvent NMP and uniformly mixed to prepare a ternary positive electrode slurry, and the positive electrode slurry is uniformly coated on a positive electrode collector Al foil with a 20µm thickness and dried to obtain a positive electrode, which is rolled for reserve.

### b. preparation of a mixed slurry

Melamine pyrophosphate (MPP) and polyvinylidene difluoride (PVDF) are weighed out precisely according to a mass fraction of 95.5:4.5 in active ingredient. APP and PVDF are uniformly dispersed into NMP in a high-speed dispersion machine to obtain an APP slurry and a PVDF slurry respectively, the APP slurry and the PVDF slurry are uniformly dispersed, and a mixed slurry is obtained by controlling solid content to be 45wt% via NMP.

### c. preparation of a composite positive electrode sheet

The above mixed slurry is coated on both sides of the positive electrode sheet and dried at 70°C, and a coating thickness for one side is controlled to be 4µm.

### d. preparation of a negative electrode

An active material of a negative electrode being graphite powder with a 95wt% mass fraction, a conductive agent KS-6 with a 2wt% mass fraction, a thickener CMC (sodium carboxymethyl cellulose) with a 1wt% mass fraction and an adhesive SBR (styrene-butadiene rubber) with a 2wt% mass fraction are added into a solvent being deionized water and uniformly mixed to obtain a negative electrode slurry, and the negative electrode slurry is uniformly coated on a negative electrode collector Cu foil with a 10µm thickness and dried to obtain the negative electrode, which is rolled for reserve.

### e. preparation of a battery

(1) The above composite positive electrode sheet, the negative electrode sheet of a battery and polyethylene-based ceramic separator with a 24µm thickness (a thickness of a ceramic coating is 4µm) are stacked to form a component; and
(2) injecting electrolyte: injecting the electrolyte into the component of the lithium-ion battery to obtain a lithium-ion secondary battery. The electrolyte is LiPF6 in a system including EC, EMC and DMC, a concentration of the LiPF6 is 1mol/ L, and a volume ratio of EC, EMC and DMC is 1:1:1.

### EXAMPLE 5

### a. preparation of a positive electrode

An active material LiNi1/3Co1/3Mn1/3O2 with a 93wt% mass fraction, a conductive agent Super P with a 4wt% mass fraction and an adhesive PVDF with a 3wt% mass fraction are added into a solvent NMP and uniformly mixed to prepare a ternary positive electrode slurry, and the positive electrode slurry is uniformly coated on a positive electrode collector Al foil with a 20µm thickness and dried to obtain a positive electrode, which is rolled for reserve.

### b. preparation of a mixed slurry

Melamine polyphosphate (MPOP) and polyvinylidene difluoride (PVDF) are weighed out precisely according to a mass fraction of 97:3 in active ingredient. APP and PVDF are uniformly dispersed into NMP in a high-speed dispersion machine to obtain an APP slurry and a PVDF slurry respectively, the APP slurry and the PVDF slurry are uniformly dispersed, and a mixed slurry is obtained by controlling solid content to be 40wt% via NMP.

### c. preparation of a composite positive electrode sheet

The above mixed slurry is coated on both sides of the positive electrode sheet and dried at 70°C, and a coating thickness for one side is controlled to be 4µm.

### d. preparation of a negative electrode

An active material of a negative electrode being graphite powder with a 95wt% mass fraction, a conductive agent KS-6 with a 2wt% mass fraction, a thickener CMC (sodium carboxymethyl cellulose) with a 1wt% mass fraction and an adhesive SBR (styrene-butadiene rubber) with a 2wt% mass fraction are added into a solvent being deionized water and uniformly mixed to obtain a negative electrode slurry, and the negative electrode slurry is uniformly coated on a negative electrode collector Cu foil with a 10µm thickness and dried to obtain the negative electrode, which is rolled for reserve.

### e. preparation of a battery

(1) The above composite positive electrode sheet, the negative electrode sheet of a battery and polyethylene-based ceramic separator with a 24µm thickness (a thickness of a ceramic coating is 4µm) are stacked to form a component; and
(2) injecting electrolyte: injecting the electrolyte into the component of the lithium-ion battery to obtain a lithium-ion secondary battery. The electrolyte is LiPF6 in a system including EC, EMC and DMC, a concentration of the LiPF6 is 1mol/ L, and a volume ratio of EC, EMC and DMC is 1:1:1.

### EXAMPLE 6

### a. preparation of a positive electrode sheet

An active material LiFePO4 with a 93wt% mass fraction, a conductive agent carbon black with a 3.5wt% mass fraction and an adhesive LA132 with a 3.5wt% mass fraction are added into a solvent being deionized water and uniformly mixed to prepare a ternary positive electrode slurry, and the positive electrode slurry is uniformly coated on a positive electrode collector Al foil with a 20µm thickness and dried to obtain a positive electrode, which is rolled for reserve.

### b. preparation of a mixed slurry

Ammonium polyphosphate (APP), polydimethylsiloxane (PDMS) and styrene-butadiene rubber (SBR) are weighed out precisely according to a mass ratio of 80:15:5 in active ingredient. The polydimethylsiloxane and ammonium polyphosphate are quickly stirred at a 50m/s linear velocity for 30 minutes in a high-speed dispersion machine to obtain PDMS-coated APP granule (PDMS-APP). PDMS-APP is uniformly dispersed into deionized water in the high-speed dispersion machine, SBR is added into the above mixed liquid and uniformly dispersed, and a mixed slurry is obtained by controlling solid content to be 60wt% by adding the deionized water into the slurry.

### c. preparation of a composite positive electrode sheet

The above mixed slurry in step a is coated on both sides of the positive electrode sheet prepared in step b and dried at 75°C, and a coating thickness of a functional coating for one side is controlled to be 5µm.

### d. preparation of a negative electrode

An active material of a negative electrode being graphite powder with a 95wt% mass fraction, a conductive agent KS-6 with a 2wt% mass fraction, a thickener CMC (sodium carboxymethyl cellulose) with a 1wt% mass fraction and an adhesive SBR (styrene-butadiene rubber) with a 2wt% mass fraction are added into a solvent being deionized water and uniformly mixed to obtain a negative electrode slurry, and the negative electrode slurry is uniformly coated on a negative electrode collector Cu foil with a 10µm thickness and dried to obtain the negative electrode, which is rolled for reserve.

### e. preparation of a battery

(1) The above composite positive electrode sheet, the negative electrode sheet of a battery and polypropylene-based ceramic separator with a 24µm thickness are stacked to form a component; and
(2) injecting electrolyte: injecting the electrolyte into the component of the lithium-ion battery to obtain a lithium-ion secondary battery. The electrolyte is LiPF6 in a system including EC, EMC and DMC, a concentration of the LiPF6 is 1mol/ L, and a volume ratio of EC, EMC and DMC is 1:1:1.

### EXAMPLE 7

### a. preparation of a positive electrode

An active material LiNi1/3Co1/3Mn1/3O2 with a 93wt% mass fraction, a conductive agent Super P with a 4wt% mass fraction and an adhesive PVDF with a 3wt% mass fraction are added into a solvent NMP and uniformly mixed to prepare a ternary positive electrode slurry, and the positive electrode slurry is uniformly coated on a positive electrode collector Al foil with a 20µm thickness and dried to obtain a positive electrode, which is rolled for reserve.

### b. preparation of a mixed slurry

Melamine pyrophosphate (MPP), melamine cyanurate (MCA) and polyvinylidene difluoride (PVDF) are weighed out precisely according to a mass fraction of 50:45:5 in active ingredient. MPP, MCA and PVDF are uniformly dispersed into NMP in a high-speed dispersion machine to obtain an MPP slurry, an MCA slurry and a PVDF slurry respectively, the MPP slurry, the MCA slurry and the PVDF slurry are uniformly dispersed, and a mixed slurry is obtained by controlling solid content to be 55wt% via NMP.

### c. preparation of a composite positive electrode sheet

The above mixed slurry in step b is coated on both sides of the positive electrode sheet in step a and dried at 70°C, and a coating thickness for one side is controlled to be 4µm.

### d. preparation of a negative electrode

An active material of a negative electrode being graphite powder with a 95wt% mass fraction, a conductive agent KS-6 with a 2wt% mass fraction, a thickener CMC (sodium carboxymethyl cellulose) with a 1wt% mass fraction and an adhesive SBR (styrene-butadiene rubber) with a 2wt% mass fraction are added into a solvent being deionized water and uniformly mixed to obtain a negative electrode slurry, and the negative electrode slurry is uniformly coated on a negative electrode collector Cu foil with a 10µm thickness and dried to obtain the negative electrode, which is rolled for reserve.

### e. preparation of a battery

(1) The above composite positive electrode sheet, the negative electrode sheet of a battery and polyethylene-based ceramic separator with a 24µm thickness (a thickness of a ceramic coating is 4µm) are stacked to form a component; and
(2) injecting electrolyte: injecting the electrolyte into the component of the lithium-ion battery to obtain a lithium-ion secondary battery. The electrolyte is LiPF6 in a system including EC, EMC and DMC, a concentration of the LiPF6 is 1mol/ L, and a volume ratio of EC, EMC and DMC is 1:1:1.

### EXAMPLE 8

### a. preparation of a positive electrode sheet

An active material LiFePO4 with a 93wt% mass fraction, a conductive agent being carbon black with a 3.5wt% mass fraction and an adhesive LA132 with a 3.5wt% mass fraction are added into a solvent being deionized water and uniformly mixed to prepare a ternary positive electrode slurry, and the positive electrode slurry is uniformly coated on a positive electrode collector Al foil with a 20µm thickness and dried to obtain a positive electrode, which is rolled for reserve.

### b. preparation of a negative electrode sheet

An active material of a negative electrode being graphite powder with a 95wt% mass fraction, a conductive agent KS-6 with a 2wt% mass fraction, a thickener CMC (sodium carboxymethyl cellulose) with a 1wt% mass fraction and an adhesive SBR (styrene-butadiene rubber) with a 2wt% mass fraction are added into a solvent being deionized water and uniformly mixed to obtain a negative electrode slurry, and the negative electrode slurry is uniformly coated on a negative electrode collector Cu foil with a 10µm thickness and dried to obtain the negative electrode, which is rolled for reserve.

### c. preparation of a mixed slurry

Ammonium polyphosphate (APP), melamine cyanurate (MCA) and PVDF are weighed out precisely according to a mass fraction of 50:47:3 in active ingredient. MPP and MCA are uniformly dispersed into NMP in a high-speed dispersion machine, PVDF is added into the above slurry and uniformly dispersed, and a mixed slurry is obtained by controlling solid content to be 35wt% via NMP.

### d. preparation of a composite negative electrode sheet

The above mixed slurry in step c is coated on both sides of the negative electrode sheet prepared in step b and dried at 80°C, and a coating thickness for one side is controlled to be 5µm.

### e. preparation of a battery

(1) The above composite negative electrode sheet, the positive electrode sheet of a battery and polyethylene-based ceramic separator with a 24µm thickness are stacked to form a component; and
(2) injecting electrolyte: injecting the electrolyte into the component of the lithium-ion battery to obtain a lithium-ion secondary battery. The electrolyte is LiPF6 in a system including EC, EMC and DMC, a concentration of the LiPF6 is 1mol/ L, and a volume ratio of EC, EMC and DMC is 1:1:1.

### EXAMPLE 9

### a. preparation of a positive electrode

An active material LiNi1/3Co1/3Mn1/3O2 with a 93wt% mass fraction, a conductive agent Super P with a 4wt% mass fraction and an adhesive PVDF with a 3wt% mass fraction are added into a solvent NMP and uniformly mixed to prepare a ternary positive electrode slurry, and the positive electrode slurry is uniformly coated on a positive electrode collector Al foil with a 20µm thickness and dried to obtain a positive electrode, which is rolled for reserve.

### b. preparation of a negative electrode

An active material of a negative electrode being graphite powder with a 95wt% mass fraction, a conductive agent KS-6 with a 2wt% mass fraction, a thickener CMC (sodium carboxymethyl cellulose) with a 1wt% mass fraction and an adhesive SBR (styrene-butadiene rubber) with a 2wt% mass fraction are added into a solvent being deionized water and uniformly mixed to obtain a negative electrode slurry, and the negative electrode slurry is uniformly coated on a negative electrode collector Cu foil with a 10µm thickness and dried to obtain the negative electrode, which is rolled for reserve.

### c. preparation of a mixed slurry

Ammonium polyphosphate (APP) and polyvinylidene difluoride (PVDF) are weighed out precisely according to a mass fraction of 98:2 in active ingredient. APP and PVDF are uniformly dispersed into NMP in a high-speed dispersion machine to obtain an APP slurry and a PVDF slurry respectively, the APP slurry and the PVDF slurry are uniformly dispersed, and a mixed slurry is obtained by controlling solid content to be 30wt% via NMP.

### d. preparation of a composite negative electrode sheet

The above mixed slurry in step c is coated on both sides of the negative electrode sheet prepared in step b and dried at 75°C, and a coating thickness for one side is controlled to be 5µm.

### e. preparation of a battery

(1) The above positive electrode sheet, the composite negative electrode sheet of a battery and polyethylene-based ceramic separator with a 24µm thickness (a thickness of a ceramic coating is 4µm) are stacked to form a component; and
(2) injecting electrolyte: injecting the electrolyte into the component of the lithium-ion battery to obtain a lithium-ion secondary battery. The electrolyte is LiPF6 in a system including EC, EMC and DMC, a concentration of the LiPF6 is 1mol/ L, and a volume ratio of EC, EMC and DMC is 1:1:1.

### EXAMPLE 10

### a. preparation of a positive electrode

An active material LiFePO4 with a 93wt% mass fraction, a conductive agent being carbon black with a 3.5wt% mass fraction and an adhesive LA132 with a 3.5wt% mass fraction are added into a solvent being deionized water and uniformly mixed to prepare a ternary positive electrode slurry, and the positive electrode slurry is uniformly coated on a positive electrode collector Al foil with a 20µm thickness and dried to obtain a positive electrode, which is rolled for reserve.

### b. preparation of a negative electrode

An active material of a negative electrode being graphite powder with a 95wt% mass fraction, a conductive agent KS-6 with a 2wt% mass fraction, a thickener CMC (sodium carboxymethyl cellulose) with a 1wt% mass fraction and an adhesive SBR (styrene-butadiene rubber) with a 2wt% mass fraction are added into a solvent being deionized water and uniformly mixed to obtain a negative electrode slurry, and the negative electrode slurry is uniformly coated on a negative electrode collector Cu foil with a 10µm thickness and dried to obtain the negative electrode, which is rolled for reserve.

### c. preparation of a mixed slurry

Ammonium polyphosphate (APP) and PVDF are weighed out precisely according to a mass fraction of 97:3 in active ingredient. APP and PVDF are uniformly dispersed into NMP in a high-speed dispersion machine, PVDF is added into the above slurry and uniformly dispersed, and a mixed slurry is obtained by controlling solid content to be 40wt% via NMP.

### d. preparation of a composite negative electrode sheet

The above mixed slurry in step c is coated on both sides of the negative electrode sheet prepared in step b and dried at 75°C, and a coating thickness for one side is controlled to be 5µm.

### e. preparation of a battery

(1) The above positive electrode sheet, the negative electrode sheet of a battery and polypropylene-based ceramic separator with a 24µm thickness (a thickness of a ceramic coating is 4µm) are stacked to form a component; and
(2) injecting electrolyte: injecting the electrolyte into the component of the lithium-ion battery to obtain a lithium-ion secondary battery. The electrolyte is LiPF6 in a system including EC, EMC and DMC, a concentration of the LiPF6 is 1mol/ L, and a volume ratio of EC, EMC and DMC is 1:1:1.

### EXAMPLE 11

### 1. Testing a safety performance of a battery

A safety performance test is performed on batteries prepared in examples 1 to 10 and comparative examples 1 to 2 using a GB/T 31485-2015 method (safety requirements and test method of a power storage battery used by an electric vehicle), and detailed results are shown in Table 1, which shows safety test results of batteries.

**Table 1 safety test results of batteries**

| | | **comparative example 1** | **comparative example 2** | **example 1** | **example 2** |
|---|---|---|---|---|---|
| extruded | phenomenon | fire explosion | fire explosion | no fire no explosion | no fire no explosion |
| | the highest temperature of housing/°C | 585 | 512 | 66 | 73 |
| stabbed | phenomenon | fire explosion | fire explosion | no fire no explosion | no fire no explosion |
| | the highest temperature of housing/°C | 569 | 498 | 64 | 71 |
| over-charged | phenomenon | fire explosion | fire explosion | no fire no explosion | no fire no explosion |
| | the highest temperature of housing/°C | 622 | 608 | 75 | 83 |
| short-circuited | phenomenon | no fire no explosion | no fire no explosion | no fire no explosion | no fire no explosion |
| | the highest temperature of housing/°C | 132 | 127 | 56 | 63 |

| | | **example 3** | **example 4** | **example 5** | **example 6** |
|---|---|---|---|---|---|
| extruded | phenomenon | no fire no explosion | no fire no explosion | no fire no explosion | no fire no explosion |
| | the highest temperature of housing/°C | 66 | 82 | 81 | 62 |
| stabbed | phenomenon | no fire no explosion | no fire no explosion | no fire no explosion | no fire no explosion |
| | the highest temperature of housing/°C | 65 | 79 | 77 | 60 |
| over-charged | phenomenon | no fire no explosion | no fire no explosion | no fire no explosion | no fire no explosion |
| | the highest temperature of housing/°C | 76 | 91 | 89 | 71 |
| short - circuited | phenomenon | no fire no explosion | no fire no explosion | no fire no explosion | no fire no explosion |
| | the highest temperature of housing/°C | 56 | 72 | 71 | 52 |

| | | **example 7** | **example 8** | **example 9** | **example 10** |
|---|---|---|---|---|---|
| extruded | phenomenon | no fire no explosion | no fire no explosion | no fire no explosion | no fire no explosion |
| | the highest temperature of housing/°C | 78 | 59 | 61 | 67 |
| stabbed | phenomenon | no fire no explosion | no fire no explosion | no fire no explosion | no fire no explosion |
| | the highest temperature of housing/°C | 76 | 57 | 59 | 64 |
| over-charged | phenomenon | no fire no explosion | no fire no explosion | no fire no explosion | no fire no explosion |
| | the highest temperature of housing/°C | 88 | 68 | 71 | 78 |
| short - circuited | phenomenon | no fire no explosion | no fire no explosion | no fire no explosion | no fire no explosion |
| | the highest temperature of housing/°C | 68 | 49 | 51 | 57 |

As may be seen from Table 1, lithium-ion batteries prepared in examples 1 to 10 have a superior safety performance.

### 2. Measuring a cycle performance of a battery

Capacity retention ratios of lithium-ion batteries provided by examples 1 to 10 and comparative examples 1 to 2 in 1C/1C different cycles are measured, and detailed results are shown in following Table 2, which shows cycle performance of lithium-ion batteries with different separators.

**Table 2 cycle performance of different lithium-ion batteries**

| Type of separator | Capacity retention ratios in different cycles (%) | | | | |
|---|---|---|---|---|---|
| | 300 cycles | 600 cycles | 900 cycles | 1200 cycles | 1500 cycles |
| example 1 | 95.4 | 93.7 | 92.2 | 90.8 | 89.5 |
| example 2 | 95.3 | 93.6 | 92.1 | 90.7 | 89.4 |
| example 3 | 95.5 | 93.1 | 90.8 | 88.6 | 86.4 |
| example 4 | 95.4 | 92.8 | 90.3 | 88.0 | 85.7 |
| example 5 | 95.4 | 92.8 | 90.2 | 87.9 | 85.6 |
| example 6 | 95.5 | 93.9 | 92.3 | 91.0 | 89.7 |
| example 7 | 95.4 | 92.8 | 90.3 | 88.0 | 85.8 |
| example 8 | 95.5 | 93.8 | 92.3 | 90.9 | 89.6 |
| example 9 | 95.5 | 93.0 | 90.6 | 88.4 | 86.3 |
| example 10 | 95.4 | 93.7 | 92.2 | 90.8 | 89.5 |
| comparative example 1 | 95.2 | 92.6 | 90.1 | 87.8 | 85.6 |
| comparative example 2 | 95.3 | 92.1 | 90.6 | 89.9 | 89.3 |

As may be seen from the Table 2, batteries with lithium-ion composite electrode sheets prepared in examples 1 to 10 have no effect on cycle lifespan of the batteries.

### 3. Measuring a rate discharge performance of a battery

Capacity retention ratios of lithium-ion batteries provided by examples 1 to 10 and comparative examples 1 to 2 in a case that the batteries are discharged at 3C rate are measured, and detailed results are shown in following Table 3, which shows rate discharge performance of lithium-ion batteries with different electrode sheets.

**Table 3 rate performance of lithium-ion batteries with different electrode sheets**

| Type of separators | Capacity retention ratio/% |
|---|---|
| comparative example 1 | 96.8 |
| comparative example 2 | 96.6 |
| example 1 | 95.9 |
| example 2 | 96.3 |
| example 3 | 95.9 |
| example 4 | 96.3 |
| example 5 | 96.6 |
| example 6 | 95.6 |
| example 7 | 96.4 |
| example 8 | 95.7 |
| example 9 | 95.8 |
| example 10 | 95.8 |

As may be seen from the Table 3, lithium-ion batteries prepared in examples 1 to 10 have good rate performance.

## Claims

1. A composite electrode sheet for a lithium-ion battery, comprising a battery electrode sheet and a functional coating composited on a surface of the battery electrode sheet, wherein the functional coating is prepared from a functional substance and an adhesive, the functional substance is selected from one or more of melamine cyanurate, pentaerythritol melamine phosphate, ammonium polyphosphate, polydimethylsiloxane and melamine pyrophosphate, the adhesive is one or more of polyvinylidene fluoride and copolymers thereof, acrylic acid and copolymers thereof, acrylate and copolymers thereof, polyvinyl alcohol, carboxymethyl cellulose and polyurethane, and the battery electrode sheet is at least one of a positive electrode and a negative electrode of a battery; wherein a thickness of the functional coating for one side ranges from 3µm to 6µm, and a mass ratio of the functional substance to the adhesive is (95 to 99):(1 to 5).

2. The composite electrode sheet according to claim 1, wherein an active substance of the positive electrode is selected from one or more materials of LiFePO4, LiMn2O4, LiCoO2, LiV2O5, LNiO2, LiNi(1-x-y)CoxAlyO2, LiNi(1-m-n)ComMnnO2 and LiCozNi(1-z)O2, wherein 0≤x≤1, 0≤y≤1, x+y=1, 0≤m≤1, 0≤n≤1, m+n=1, 0≤z≤1; and
an active substance of the negative electrode is selected from one or more of graphite, mesocarbon microbead and a silicon-based material.

3. A preparing method for preparing a composite electrode sheet for a lithium-ion battery as defined in claim 1 or 2, comprising following steps:
(A) dispersing a functional substance and an adhesive into a solvent to obtain mixed slurry, wherein the functional coating is prepared from a functional substance and an adhesive, the functional substance is selected from one or more of melamine cyanurate, pentaerythritol melamine phosphate, ammonium polyphosphate, polydimethylsiloxane and melamine pyrophosphate, the adhesive is one or more of polyvinylidene fluoride and copolymers thereof, acrylic acid and copolymers thereof, acrylate and copolymers thereof, polyvinyl alcohol, carboxymethyl cellulose and polyurethane; and
(B) coating the mixed slurry on a surface of a battery electrode sheet and drying the mixed slurry to obtain the composite electrode sheet for the lithium-ion battery, wherein the battery electrode sheet is at least one of a positive electrode and a negative electrode of a battery.

4. The preparing method according to claim 3, wherein a method for the coating is selected from transfer coating, dip coating, blade coating and extrusion coating.

5. A lithium-ion battery, comprising a positive electrode of the battery, a negative electrode of the battery, a separator and an electrolyte, wherein at least one of the positive electrode and the negative electrode of the battery is the composite electrode sheet for the lithium-ion battery according to claim 1 or 2 or the composite electrode sheet for the lithium-ion battery prepared by the preparing method according to claim 3 or 4.

## Patentansprüche

1. Verbundelektrodenblech für eine Lithium-Ionen-Batterie, umfassend ein Batterieelektrodenblech und eine funktionelle Beschichtung, die auf einer Fläche des Batterieelektrodenblechs zusammengesetzt ist, wobei die funktionelle Beschichtung aus einer funktionellen Substanz und einem Klebstoff hergestellt ist, die funktionelle Substanz aus einem oder mehreren von Melamincyanurat, Pentaerythritmelaminphosphat, Ammoniumpolyphosphat, Polydimethylsiloxan und Melaminpyrophosphat ausgewählt ist, der Klebstoff eines oder mehrere von Polyvinylidenfluorid und Copolymeren davon, Acrylsäure und Copolymeren davon, Acrylat und Copolymeren davon, Polyvinylalkohol, Carboxylmethylcellulose und Polyurethan ist und das Batterieelektrodenblech mindestens eine von einer positiven Elektrode und einer negativen Elektrode einer Batterie ist; wobei eine Dicke der funktionellen Beschichtung für eine Seite von 3 µm bis 6 µm reicht und ein Massenverhältnis der funktionellen Substanz zu dem Klebstoff (95 zu 99):(1 zu 5) beträgt.

2. Verbundelektrodenblech nach Anspruch 1, wobei:
- eine aktive Substanz der positiven Elektrode aus einem oder mehreren Materialien von LiFePO₄, LiMn₂O₄, LiCoO₂, LiV₂O₅, LiNiO₂, LiNi_{(1-x-y)}CoxAlyO₂, LiNi₍₁ₘ₋ₙ₎CoₘMnₙO₂ und LiCo_{z}Ni_{(1-z)}O₂ ausgewählt ist,
wobei 0≤x≤1, 0≤y≤1, x+y=1, 0≤m≤1, 0≤n≤1, m+n=1, 0≤z≤1; und
- eine aktive Substanz der negativen Elektrode aus einem oder mehreren von Graphit, Mesocarbonmikroperle und einem siliziumbasierten Material ausgewählt ist.

3. Herstellungsverfahren zum Herstellen eines Verbundelektrodenblechs für eine Lithium-Ionen-Batterie nach Anspruch 1 oder 2, das die folgenden Schritte umfasst:
(A) Dispergieren einer funktionellen Substanz und eines Klebstoffs in ein Lösemittel, um gemischten Schlamm zu erlangen, wobei die funktionelle Beschichtung aus einer funktionellen Substanz und einem Klebstoff hergestellt ist, wlche funktionelle Substanz aus einem oder mehreren von Melamincyanurat, Pentaerythritolmelaminphosphat, Ammoniumpolyphosphat, Polydimethylsiloxan und Melaminpyrophosphat ausgewählt ist, der Klebstoff eines oder mehrere von Polyvinylidenfluorid und Copolymeren davon, Acrylsäure und Copolymeren davon, Acrylat und Copolymeren davon, Polyvinylalkohol, Carboxylmethylcellulose und Polyurethan ist; und
(B) Auftragen des gemischten Schlamms auf eine Fläche eines Batterieelektrodenblechs und Trocknen des gemischten Schlamms, um das Verbundelektrodenblech für die Lithium-Ionen-Batterie zu erlangen, wobei das Batterieelektrodenblech mindestens eines von einer positiven Elektrode und einer negativen Elektrode einer Batterie ist.

4. Herstellungsverfahren nach Anspruch 3, wobei ein Verfahren zur Beschichtung aus Transferbeschichtung, Tauchbeschichtung, Rakelbeschichtung und Extrusionsbeschichtung ausgewählt wird.

5. Lithium-Ionen-Batterie, die eine positive Elektrode der Batterie, eine negative Elektrode der Batterie, eine Trennvorrichtung und einen Elektrolyten umfasst, wobei mindestens eine von der positiven Elektrode und der negativen Elektrode der Batterie das Verbundelektrodenblech für die Lithium-Ionen-Batterie nach Anspruch 1 oder 2 oder das Verbundelektrodenblech für die Lithium-Ionen-Batterie ist, das durch das Herstellungsverfahren nach Anspruch 3 oder 4 hergestellt ist.

## Revendications

1. Un feuillard d'électrode composite pour une batterie au lithium-ion, comprenant un feuillard d'électrode de batterie et d'un composite formé d'un revêtement fonctionnel appliquée sur une surface du feuillard d'électrode de batterie, dans lequel le revêtement fonctionnel est préparé à partir d'une substance fonctionnelle et d'un adhésif,
- la substance fonctionnelle est un ou plusieurs des composés choisis parmi le cyanurate de mélamine, le phosphate de pentaérythritol-mélamine, le polyphosphate d'ammonium, le polydiméthylsiloxane et le pyrophosphate de mélamine,
- l'adhésif est un ou plusieurs des composés choisis parmi le poly(fluorure de vinylène) et ses copolymères, l'acide acrylique et ses copolymères, un acrylate et ses copolymères, le poly(alcool vinylique), la carboxyméthylcellulose et le polyuréthane, et
- le feuillard d'électrode de batterie est au moins une électrode positive et une électrode négative d'une batterie ; dans lequel l'épaisseur du revêtement fonctionnel pour un côté est située dans la plage allant de 3 µm à 6 µm, et le rapport en masse de la substance fonctionnelle à l'adhésif est de (95 à 99) / (1 à 5).

2. Un feuillard d'électrode composite selon la revendication 1, dans lequel une substance active de l'électrode positive est un ou plusieurs matériaux choisis parmi LiFePO₄, LiMn₂O₄, LiCoO₂, LiV₂O₅, LNiO₂, LiNi_{(1-x-y)}CoₓAl_{y}O₂, LiNi₍₁₋ₘ₋ₙ₎CoₘMnₙO₂ et LiCo_{z}Ni_{(1-z)}O₂,
où 0 ≤ x ≤ 1, 0 ≤ y ≤ 1, x+y = 1, 0 ≤ m ≤ 1, 0 ≤ n ≤ 1, m+n = 1,0 ≤ z ≤ 1 ; et
une substance active de l'électrode négative est un ou plusieurs choisis parmi le graphite, les micro-perles de mésocarbone et un matériau siliconé.

3. Un procédé de préparation pour préparer un feuillard d'électrode composite pour une batterie lithium-ion tel que défini dans la revendication 1 ou 2, comprenant les étapes suivantes :
(A) dispersion d'une substance fonctionnelle et d'un adhésif dans un solvant pour que soit obtenue une bouillie mixte, dans laquelle le revêtement fonctionnel est préparé à partir d'une substance fonctionnelle et d'un adhésif, la substance fonctionnelle est un ou plusieurs choisis parmi le cyanurate de mélamine, le phosphate de pentaérythritol-mélamine, le polyphosphate d'ammonium, le polydiméthylsiloxane et le pyrophosphate de mélamine, l'adhésif est un ou plusieurs parmi le poly(fluorure de vinylène) et ses copolymères, l'acide acrylique et ses copolymères, un acrylate et ses copolymères, le poly(alcool vinylique), la carboxyméthylcellulose et le polyuréthane ; et
(B) dépôt de la bouillie mixte sous forme de revêtement sur une surface d'un feuillard d'électrode de batterie et séchage de la bouillie mixte pour que soit obtenue le feuillard d'électrode composite pour la batterie lithium-ion, dans laquelle le feuillard d'électrode de batterie est au moins l'une parmi une électrode positive et une électrode négative d'une batterie.

4. Un Procédé de préparation selon la revendication 3, dans lequel le procédé pour le revêtement est choisi parmi un revêtement par transfert, un revêtement par immersion, un revêtement à la lame et un revêtement par extrusion.

5. Une batterie lithium-ion, comprenant une électrode positive de batterie, une électrode négative de batterie, un séparateur et un électrolyte, dans laquelle au moins l'une parmi l'électrode positive et l'électrode négative de la batterie est le feuillard d'électrode composite pour batterie lithium-ion selon la revendication 1 ou 2 ou le feuillard d'électrode composite pour batterie lithium-ion préparé par le procédé de préparation selon la revendication 3 ou 4.
